# EUROPÄISCHE PATENTANMELDUNG

(11) **EP 1 221 382 A2**
(43) Veröffentlichungstag der Anmeldung: **10.07.2002**
(21) Anmeldenummer: 01129344.6
(22) Anmeldetag: 17.12.2001
(51) Int. Cl.: B42C 19/02

(54) **Späte Anbindung von Registerbildinhalten an geordnete Registerbogen**

(30) Priorität: 04.01.2001 US 754562
(71) Anmelder: Heidelberger Druckmaschinen Aktiengesellschaft, 69115 Heidelberg (DE)
(72) Erfinder: Hansen, David Robert, Honeoye Falls, NY 14472 (US); Kremer, Karl-Heinz, Rochester, NY 14624 (US)
(74) Vertreter: Franzen, Peter

(57) **Zusammenfassung**

Um den Registerinhalt auf eine der Registerseiten eines geordneten Registersatzes drucken zu können, wird eine Markierung, die anzeigt, dass eine Seite ein Register enthält, sowie die zum Erzeugen des Registers in der PDF-Seite erforderliche Information in dem Speicher abgelegt. Dadurch kann der Benutzer die Seite in dem Dokument umstellen oder die Seite sogar in ein anderes Dokument kopieren, ohne dass diese Information verloren geht. Wenn das Dokument, das diese Seiten enthält, gedruckt werden soll, durchläuft ein Druckausgabemodul das PDF-Dokument und erzeugt die Register in den entsprechenden Stellen auf den Registerseiten.

## Beschreibung

Die vorliegende Erfindung betrifft eine Druckvorrichtung zum Drucken von Informationen auf ein Register.

Während nahezu jeder Computerbenutzer im Besitz eines eigenen Druckers ist und hochwertige Dokumente anfertigen kann, ist die Fähigkeit, derartige Dokumente in hoher Auflage und mit besonderen Endbearbeitungs- oder Ausrüstungsmerkmalen zu versehen, beispielsweise die Dokumente zu binden, weiterhin gewerblichen und unternehmenseigenen Druckereien vorbehalten. Die Herstellung und Ausrüstung von Dokumenten in hoher Auflage wird üblicherweise als Auflagendruck bezeichnet. Ein Auflagendrucker ist eine Druckvorrichtung, die in der Lage ist, Dokumente in hoher Stückzahl, also in hoher Auflage, schnell herzustellen. Typischerweise sind diese Drucker mit einer Papierzuführung für große Kapazitäten versehen, können mehrere Medienarten aus mehreren Quellen einziehen und sind in der Lage, ein Dokument automatisch auszurüsten, beispielsweise zu binden. Trotz der durch Auflagendrucker erreichten Automatisierung und der Verbreitung der Computertechnik ist der Auflagendruck insbesondere im DTP-Bereich (Desktop Publishing) immer noch ein komplizierter und häufig manueller Prozess.

In einer typischen Druckerei liefern Kunden Dokumentvorlagen an, aus denen ein fertiges Produkt angefertigt werden soll, beispielsweise ein gebundenes Buch, eine dreifach gefalzte Broschüre oder ein Notizbuch mit Dreiringbindung und Registerstanzung. Zudem benötigen diese Kunden das fertige Produkt normalerweise in großer Stückzahl, beispielsweise eintausend Broschüren. Die Kombination der Originalvorlagen einschließlich der Anweisungen zur Herstellung des fertigen Produkts wird als "Auftrag" bezeichnet. Die Dokumente können entweder als Papiervorlagen (Hardcopy) oder in elektronischer Form angeliefert werden, etwa auf Diskette, CD oder Band, oder sie werden über ein Netz, wie das Internet, an die Druckerei übertragen.

Nach Übergabe der Dokumente an die Druckerei übermittelt der Kunde dem Mitarbeiter der Druckerei seine Anweisungen zur Herstellung des fertigen Produkts. Der Druckereimitarbeiter notiert diese Anweisungen auf einem Arbeits- oder Auftragszettel, einem sogenannten Jobticket. Das Jobticket ist üblicherweise ein Blatt Papier, auf dem alle Anweisungen zur Herstellung des fertigen Produkts schriftlich festgehalten werden. Wie zuvor erwähnt, wird dies als Auftrag bezeichnet. Der Auftrag geht dann an einen Bediener, der den Auflagendrucker bedient, um das fertige Produkt herzustellen. Der Bediener hat die Aufgabe, das Dokument zur Herstellung vorzubereiten, die entsprechenden Materialien in den Auflagendrucker einzulegen, d.h. Papierbogen und Bindematerialien, und sicherzustellen, dass das Ergebnis einwandfrei ist.

Die Arbeit des Bedieners erscheint zwar relativ einfach, aber es gibt zahlreiche Faktoren, die diese Arbeit schnell zu einer komplizierten Tätigkeit werden lassen. Die von dem Kunden bereitgestellten Dokumente sind oftmals nicht für die Verarbeitung in dem Auflagendrucker geeignet. Einige von dem Kunden angelieferten Dokumente sind lediglich Rohmanuskripte, die noch einer grundlegenden Formatierung bedürfen, was beispielsweise die Ränder oder die Typografie betrifft. Andere Dokumente mögen zwar formatiert sein, jedoch ohne Berücksichtigung der gewünschten Bindung. Der Text des Dokuments ist dann beispielsweise zu dicht am Rand angeordnet, so dass der Text in dem fertig gebundenen Produkt teilweise nicht lesbar wäre. Einige Dokumente, wie z.B. Bücher, bedürfen besonderer Sorgfalt. Hier muss beispielsweise die erste Seite jedes Kapitels mit einer neuen Seite beginnen. Darüber hinaus gibt es weitere Formen des Ausschießens, sogenannte Ausschießschemata, beispielsweise für Broschüren oder Faltblätter, oder der Kunde liefert mehrere Dokumente an und bittet darum, diese "Kapitel" zu einem Buch mit Deckel und Bindung zusammenzutragen.

Weitere Faktoren, die den Auftrag schwierig machen können, betreffen das Bestimmen und Laden der richtigen Medien in den Auflagendrucker. Häufig sind für Aufträge viele verschiedene Papierarten erforderlich, etwa unterschiedliche Papiergewichte oder Farben. Hinzu kommt, dass bei einigen Aufträgen Registerblätter an bestimmten Stellen des Dokuments eingefügt werden müssen. Weitere Aufträge verlangen das Einfügen eines Identifikationszeichens oder einer sonstigen Ausgestaltung in das Dokument.

Es gibt zahlreiche Desktop-Anwendungen, die in der Lage sind, Dokumente für Druckzwecke zu erstellen. In einigen Fällen ist es jedoch auch notwendig, mehrere dieser Dokumente, Kapitel eines einzelnen Dokuments oder Kombinationen aus beiden, die durch Registerblätter getrennt sind, für dieselben Druckzwecke zusammenzufassen. Diese Registerblätter müssen derart beschriftet sein, dass sie die jeweiligen Unterabschnitte wiedergeben, die durch die Dokumente oder die Kapitel des Dokuments vorgegeben sind. Dieselbe Desktop-Anwendung, die die Unterabschnitte erzeugt hat, ist aus verschiedenen Gründen nicht in der Lage, das Registerblatt mit dem zugehörigen Text zu erstellen (z.B. wird die für das Registerblatt erforderliche unterschiedliche Papiergröße nicht unterstützt).

In einem kommerziellen Druckumfeld werden der Druckerei die Unterabschnitte normalerweise ohne Registerblätter und/oder Registertext angeliefert. Der Kunde erwartet ebenso wie der Ersteller des Dokuments, dass der Drucker die Möglichkeit hat, die Register zu erstellen und ein gedrucktes Dokument mit Registerblättern (und Text) zusammen mit den Unterabschnitten liefert.

Um auf Registerblätter zu drucken, müssen die Registerblätter in einem separaten Dokument erstellt werden, um sie anschließend in dem fertigen Dokument an die entsprechende Position zu ziehen. Dies kann mit der Standardkonfiguration der ImageSmart™ Document Mastering Workstation von Heidelberg Digital L.L.C., Rochester, New York, USA, erfolgen und bedarf keiner besonderen Handhabung von Registerblättern (außer der Tatsache, dass das Druckerausgabemodul die richtigen Papierparameter für diese Seiten angeben muss). Anwendungen, wie Microsoft Word®, sind dazu ebenfalls in der Lage.

In einem Umfeld, in dem Dokumente aus vorab erzeugten Teilen zusammengetragen werden, verursacht diese Vorgehensweise Probleme: Ein Kunde möchte Bedienungsanleitungen für Maschinen erstellen, die auf Bestellung angefertigt werden. Hierzu erhält die Dokumentationsabteilung eine Auswahlliste von der Fertigung, die die Dokumentelemente umfasst, aus denen sich der vollständige Dokumentationssatz zusammensetzt. Ein Beispiel hierfür wäre ein Kunde, der eine Digimaster 9110 von Heidelberg Digital L.L.C. bestellt, die nur mit dem Finisher ausgestattet ist. Dieser Kunde erhielte nur das Handbuch für die Druckmaschine plus dem Finisher-Handbuch. Ein zweiter Kunde bestellt den Stapler und das Broschüren-Modul zusätzlich zur Standardkonfiguration. Dieser Kunde würde dann die Dokumentation für diese beiden Teile sowie die Basisdokumentation erhalten. Jeder Teil der Dokumentation ist mit einem gedruckten Registerblatt versehen, um die Orientierung in dem Ordner zu erleichtern. Das Register enthält den Namen des Untersystems, das im folgenden Kapitel beschrieben wird. Je nach Anzahl der Kapitel werden die einzelnen Kapitelseiten in dem Ordner auf unterschiedlichen Seiten eines "geordneten" Mediensatzes gedruckt. Die Register müssen auf die "Ordnung" der Register ausgerichtet sein.

Damit der Drucker das gedruckte Dokument mit den entsprechenden Registern drucken kann, muss er verschiedene andere Variablen in Betracht ziehen. Dies betrifft die Standardregisterblätter, die einen "geordneten Satz" bilden. Normalerweise sind die Registersätze in 3, 5 und 7 Stück aufgebaut. Darüber hinaus sind auch individuelle Konfigurationen möglich.

Wenn für einen Auftrag Register benötigt werden, muss der Drucker die Anzahl der Unterabschnitte, für die Register erforderlich sind, mit einem der geordneten Registersätze abstimmen, die Register anfertigen und diese in den Druckvorgang einbringen. Wie bereits besprochen, steht eine Vielzahl geordneter Registersätze zur Verfügung. Der Ersteller des Dokuments gibt normalerweise nicht vor, welcher Satz zu benutzen ist (dies ist normalerweise ein "Service des Druckers"). Der Drucker stimmt die Register mit einer Registerordnung ab. Der Drucker legt die Ordnung dann fest und erstellt die jeweiligen Registerblätter in dem Dokument vor Drucklegung. Diese Registerblätter werden dann Teil des Dokuments. Die Positionierung der Registertexte ist festgelegt, da diese auf der Registerordnung beruht.

Änderungen in der Abstimmung der Registerordnung oder der Registertexte zwingen den Drucker, die Registerblätter in dem Dokument neu anzufertigen. Dies kann für den Drucker sehr zeitaufwändig sein und seine Rendite schmälern, die er aus dem Druckauftrag erwirtschaftet.

Es ist daher eine Vorrichtung und ein Verfahren zum Binden der Registerinformation an die geordneten Registerblätter wünschenswert, wobei die Registerordnung erst unmittelbar vor Drucken des Dokuments angegeben zu werden braucht. Diese Anbindung muss zudem so einfach und schnell erfolgen, als ob man lediglich einen weiteren Parameter für die Druckeinrichtung angeben würde.

Diese Aufgabe wird durch eine Vorrichtung mit den Merkmalen des Anspruchs 1 sowie durch ein Verfahren nach Anspruch 11 gelöst. Weitere Merkmale ergeben sich aus den Unteransprüchen.

Um den Registerinhalt auf eine der Registerseiten eines geordneten Registersatzes drucken zu können, wird eine Markierung, die anzeigt, dass eine Seite ein Register enthält, und die zum Erzeugen des Registers in der Seite erforderliche Information im Speicher abgelegt. Dadurch kann der Benutzer die Seite in dem Dokument umstellen oder die Seite sogar in ein anderes Dokument kopieren, ohne dass diese Information verloren geht. Wenn das Dokument, das diese Seiten enthält, gedruckt werden soll, durchläuft ein Druckausgabemodul das Dokument und erzeugt die Register in den entsprechenden Stellen auf den Registerseiten.

In einem bevorzugten Ausführungsbeispiel werden private PDF-Seitenobjekte benutzt, um diese Information auf Seitenebene zu drucken. Hierdurch ist es möglich, die Seite in einem Dokument umzustellen oder in andere Dokumente zu kopieren, ohne nachhalten zu müssen, welche Seiten auf Registern gedruckt werden.

Die Erfindung wird im folgenden anhand in der Zeichnung dargestellter Ausführungsbeispiele näher erläutert.

Es zeigen
- Fig. 1a,b: ein Ablaufdiagramm zur Darstellung eines bevorzugten Arbeitsablaufs im Auflagendruck mit den Übergabepunkten A, B, C, D und E,
- Fig. 2: ein Ablaufdiagramm zur Darstellung des Ablaufs der Benutzerfunktionen des bevorzugten Ausführungsbeispiels, und
- Fig. 3: eine Darstellung einer grafischen Benutzeroberfläche gemäß dem bevorzugten Ausführungsbeispiel.

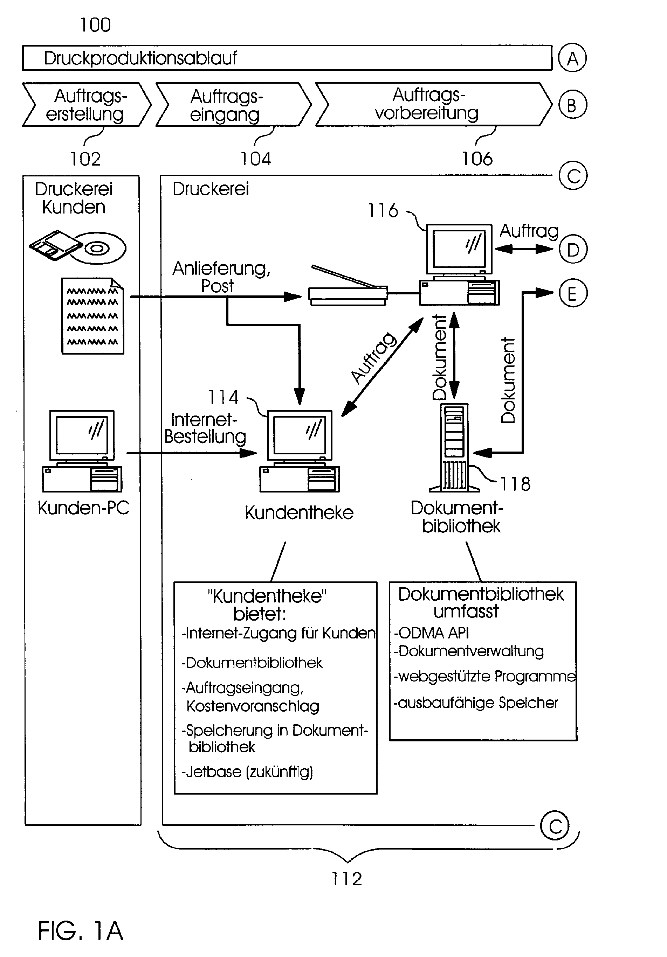

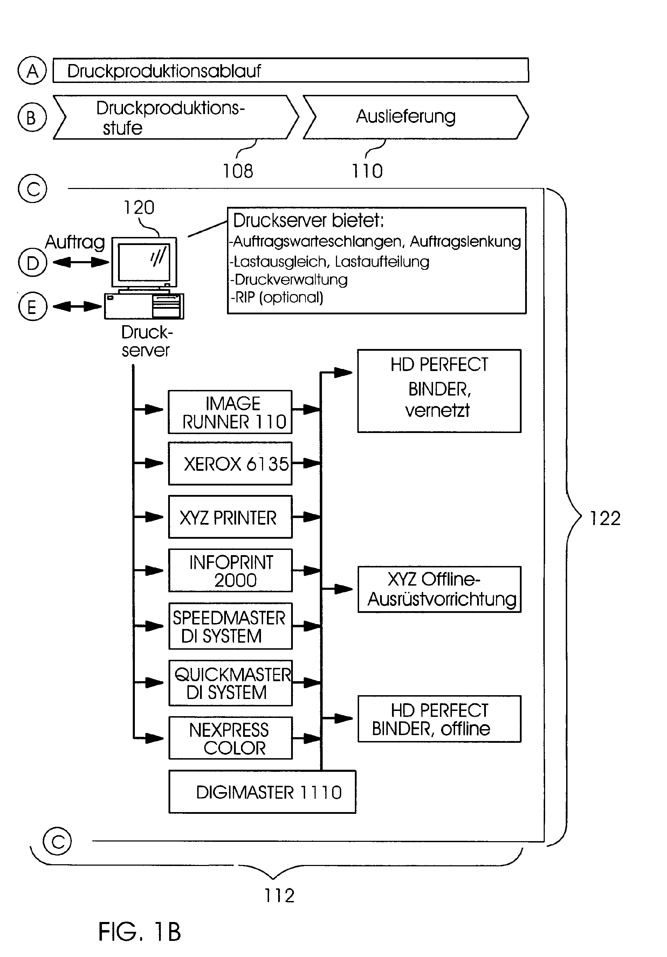

Um ein besseres Verständnis der vorliegenden Erfindung zu ermöglichen, wird der Produktionsablauf in einer Auflagendruckerei nachfolgend erläutert. Fig. 1 zeigt ein Ablaufdiagramm zur Darstellung des Produktionsablaufs 100 in einer typischen Druckerei, etwa einem gewerblichen Druckereibetrieb für hohe Auflagen. Definitionsgemäß umfasst ein Arbeitsablauf die Aufgaben, Schritte, Organisationen oder die beteiligten Menschen, die erforderliche Informationseingabe und -ausgabe sowie die für jeden Schritt in einem Geschäftsprozess erforderlichen Werkzeuge. Wie nachfolgend erläutert wird, lässt sich ein Arbeitsablauf zum Analysieren und Verwalten eines Geschäfts oder eines Prozesses, wie etwa dem Auflagendruck, mit einem objektorientierten Ansatz kombinieren, der sich tendenziell auf die einzelnen beteiligten Objekte und Prozesse konzentriert, etwa die Dokumente, Seiten, Daten und Datenbanken. Zum Zwecke der vorliegenden Beschreibung impliziert der Begriff "objektorientiert" in Bezug auf die beschriebenen Ausführungsbeispiele nicht, dass ein objektorientierter Programmieransatz das einzige Verfahren zur Implementierung der beschriebenen Ausführungsbeispiele ist.

Fig. 1 zeigt zudem ein typisches Computernetz 112 zur Verwendung in einer Druckerei. Ein typischer digitaler Druckereibetrieb umfasst ein Computernetz 112 aus Computer-Workstations 114, 116, Servern 118, 120 sowie Druckvorrichtungen 122 für hohe Auflagen. Die Server 118, 120 umfassen Netzserver 118 und Druckserver 120. Die Topologie des Netzes 112 ist üblicherweise derart aufgebaut, dass sie auf den Produktionsablauf 100 der Druckerei abgestimmt ist. Das Netz 112 kann als verdrahtetes oder drahtloses Ethernet-Netz oder als eine andere Form eines Netzes oder als lokales Netz implementiert sein. Das Netz 112 kann verdrahtete oder drahtlose Verbindungen zu Weitverkehrsnetzen, wie das Internet, umfassen sowie Verbindungen zu anderen lokalen Netzen, wie ein virtuelles privates Netz.

Der Produktionsablauf 100 umfasst die Verfahrensstufen der Auftragserstellung 102, des Aufragseingangs 104, der Auftragsvorbereitung 106, der Druckproduktion 108 und der Auslieferung 110. Alternativ hierzu können eine oder mehrere dieser Verfahrensstufen kombiniert werden oder es können weitere Verfahrensstufen vorhanden sein. Die Auftragserstellung 102 ist die Verfahrensstufe, auf der die Dokumente und Anweisungen von dem Kunden eingehen, die zusammen als ein "Auftrag" definiert sind. Die Auftragserstellung 102 kann erfolgen, wenn ein Kunde seinen Auftrag physisch in der Druckerei abliefert, ob als Druckvorlage oder in elektronischer Form, oder wenn er den Auftrag in anderer Form an die Druckerei überträgt, etwa per Telefon, Fax, Briefpost, elektronischer Post oder über ein lokales Netzwerk (LAN = local area network) oder ein Weitverkehrsnetz, wie das Internet. Es sei darauf hingewiesen, dass ein Auftrag mehr als ein Dokument und mehr als einen Anweisungssatz umfassen kann. Beispielsweise kann ein Auftrag viele Dokumente umfassen, die zusammen ein Kapitel eines Buches bilden, zusammen mit einem Dokument, das ein Deckblatt für das Buch enthält. Dieser Beispielauftrag kann die Anweisungen zum Produzieren des Buchkörpers aus den einzelnen Kapiteldokumenten sowie einen weiteren Satz Anweisungen zum Erstellen des Umschlags enthalten. Wie nachfolgend erläutert wird, kann zudem ein dritter Satz von Anweisungen für das Zusammentragen des Umschlags mit dem Buchkörper vorhanden sein.

Der Aufragseingang 104 umfasst die Annahme des Auftrags durch die Druckerei und die Eingabe des Auftrags in das Produktions- oder Arbeitsablaufsystem der Druckerei. Üblicherweise werden die Anweisungen des Kunden auf einem speziellen Formular festgehalten, das als "Jobticket" bezeichnet wird. Ein Jobticket kann auch elektronisch erstellt und gepflegt werden. Für standardisierte Anweisungen sind gegebenenfalls auch vordefinierte Jobtickets vorhanden. Die Druckerei kann beispielsweise vorgefertigte Jobtickets besitzen, auf denen Anweisungen zum Kopieren der Dokumente, zur Dreifachlochung der fertigen Erzeugnisse und zum Zusammentragen der gestanzten Druckerzeugnisse in einem Ringordner mit drei Ringen vorgesehen sind. Wenn es sich dabei um übliche Kundenwünsche handelt, können derartige vorgefertigte Jobtickets dazu beitragen, Zeit und Ressource zu sparen. Der Druckereimitarbeiter in der Auftragsannahme braucht nur noch kundenspezifische Details einzutragen, beispielsweise die Anzahl der zu druckenden Exemplare. Vorgefertigte Jobtickets können dazu beitragen, Abläufe zu standardisieren und Fehler in der Übertragung der Kundenanweisungen zu vermeiden. In sehr einfachen Druckereien kann der Auftragseingang 104 lediglich aus der Annahme der Originaldokumente und der Anweisungen zusammen mit der Erstellung eines Jobtickets bestehen, das Abheften des Auftrags in einem Ordner und das Einordnen in eine physische Warteschlange zur nachfolgenden Bearbeitung in den jeweiligen Verfahrensstufen.

In Druckereien, die Aufträge elektronisch abwickeln, erfordert der Auftragseingang 104 die Eingabe des Auftrags in das elektronische Produktionssystem der Druckerei. Wenn der Kunde die Dokumente als Papiervorlage (Hardcopy) vorlegt, müssen die Dokumente zunächst elektronisch in das Computersystem der Druckerei eingescannt werden. Bei Dokumenten, die elektronisch angeliefert werden, müssen die Dokument-Datendateien in das Computersystem der Druckerei geladen werden.

Für den Aufragseingang 104 umfasst das Computernetz 112 ein oder mehrere Kunden-Workstations 114, also Workstations, die für den direkten Kontakt mit dem Kunden gedacht sind. Bei den Kunden-Workstations 114 handelt es sich um Computersysteme, die sich an der Auftragstheke befinden, an einem Mitarbeiterarbeitsplatz oder die für die Selbstbedienung durch den Kunden ausgelegt sind. Diese Kunden-Workstations 114 werden für den Aufragseingang 104 benutzt und sind üblicherweise auf die Verarbeitung zahlreicher verschiedener elektronischer Medien ausgelegt, wie Disketten, CDs, Bänder usw. Diese Kunden-Workstations 114 können auch darauf ausgelegt sein, Aufträge über das Internet oder über eine Netzverbindung mit den Kunden zu erhalten. Die Kunden-Workstations 114 sind üblicherweise darauf ausgelegt, zahlreiche verschiedene elektronische Dateiformate zu lesen, etwa die von Microsoft Office™ verwendeten, einer Familie von Produkten, die von der Microsoft Corporation aus Redmond, Washington, USA, hergestellt werden, oder verschiedene andere Dateiformate von DTP-Programmen, wie Aldus Pagemaker™ oder Quark Express™. Zudem können diese Kunden-Workstations 114 "druckfertige" Dateiformate lesen, die nachfolgend noch eingehender besprochen werden, beispielsweise Portable Document Format™ ("PDF"), Postscript™ ("PS") oder Printer Control Language ("PCL"). Die Kunden-Workstations 114 können auch Bildformate lesen, wie das Tagged Image File Format ("TIFF"), Bitmap-Dateien ("BMP") und PCX-Dateien. Die Kunden-Workstations 114 umfassen gegebenenfalls einen Scanner 116 zum Abtasten von Dokumentvorlagen und Einlesen der Vorlagen in ein Computersystem. Scanner sind normalerweise schwierig zu bedienen, weshalb Scanner in einigen Druckereien in der Auftragsvorbereitung 106 angeordnet sind, wo sie ausschließlich von ausgebildeten Mitarbeitern bedient werden, wie nachfolgend besprochen wird. Die Kunden-Workstations 114 sind in der Lage, ein Jobticket in elektronischer oder gedruckter Form anzufertigen, auf dem alle Anweisungen zur Ausführung des Druckauftrags festgehalten sind. Die Anfertigung des Jobtickets kann als automatischer Vorgang erfolgen, bei dem vordefinierte Jobtickets, manuelle Jobtickets oder eine Kombination daraus verwendet werden, wie nachfolgend detaillierter erläutert wird.

Die Auftragsvorbereitung 106 umfasst die Vorbereitung der Dokumente für den Druck gemäß den Anweisungen auf dem Jobticket. Für Dokumente, die in Form von Hardcopies, also von Druckvorlagen, eingereicht werden, kann die Auftragsvorbereitung 106 das Abtasten der Dokumente und das Erstellen einer getreuen und fehlerfreien elektronischen Reproduktion umfassen. Sobald die Dokumente in elektronischer Form vorliegen, müssen sie in ein gängiges Dateiformat umgesetzt werden, das in der Druckerei zur Bearbeitung und Druckausgabe der Dokumente verwendet werden kann. Dadurch entfällt für die Bediener die Notwendigkeit, mit mehreren verschiedenen Programmen zu arbeiten und komplexe Dokumente unter Verwendung verschiedener elektronischer Dateiformate für die Druckausgabe montieren zu müssen.

Beispielsweise kann ein Kunde zwei verschiedene Dokumente anliefern, von denen eines der Buchkörper ist und das andere die Fotografien, die auf bestimmten Seiten eingefügt werden sollen. Der Kunde kann dann die Anweisung geben, die Fotografien auf bestimmten Seiten einzufügen, wobei das fertig zusammengetragene Produkt fortlaufende Seitenzahlen aufweist. Der Buchkörper kann im Format von Microsoft Word™ vorliegen, während die Bilder der Fotografien beispielsweise im Format von Adobe Photoshop™ vorliegen. Zwar könnte der Bediener feststellen, auf welchen Seiten die Bilder eingefügt werden sollen, und dann die Seiten des Buches und die Fotografien in den jeweiligen Softwarepaketen nummerieren, aber dies ist eine sehr komplexe und zeitaufwändige Tätigkeit. Das setzt zudem voraus, dass der Bediener mit einer Reihe von Softwarepaketen vertraut ist und beinhaltet das Risiko, dass der Bediener mit dem jeweiligen Softwarepaket nicht vertraut ist, dass der betreffende Kunde benutzt. Es ist daher effizienter, jedes der verschiedenen Dateiformate in ein einheitliches Format umzusetzen, das es dem Bediener ermöglicht, den Auftrag mit einer einheitlichen Software zu bearbeiten. In den bevorzugten Ausführungsbeispielen werden alle Dokumente, unabhängig davon, ob sie als gedruckte Vorlage oder in elektronischer Form eingereicht werden, in ein "druckfertiges" Dateiformat umgesetzt. In den bevorzugten Ausführungsbeispielen wird das von Adobe Systems, Inc. aus San Jose, Kalifornien, USA, entwickelte Portable Document Format™ als druckfertiges Format verwendet.

Ein druckfertiges Dateiformat ist als ein Dateiformat definiert, das sowohl die zu druckenden Daten als auch die Druckersteueranweisungen enthält, die von der internen Verarbeitungseinrichtung eines Druckers oder einer anderen Form von Hardcopy-Ausgabevorrichtung direkt interpretiert werden können, um das Datenbild auf dem Ausgabemedium zu rastern. Das Rastern ist der Vorgang, bei dem Bilddaten an einer bestimmten Stelle auf dem Ausgabemedium angeordnet werden. Zu derartigen Dateiformaten zählen das Portable Document Format™ ("PDF") und Postscript™ ("PS"), beide von Adobe Systems, Inc. aus San Jose, Kalifornien, USA, sowie die Printer Control Language ("PCL") von Hewlett Packard aus Palo Alto, Kalifornien, USA. Beispiele für nicht druckfertige Formate sind die nativen Dateiformate von PC-Anwendungsprogrammen, wie z.B. Microsoft Word™. Diese Dateiformate müssen zunächst in ein druckfertiges Dateiformat umgesetzt werden, bevor sie gedruckt werden können. Einige Bilddateiformate, wie das Tagged Image File Format ("TIFF"), enthalten zwar ausschließlich Bit-Image-Daten, die sich bereits in einem Format befinden, das die Ausgabestelle auf dem Ausgabemedium angibt, aber keine Druckersteueranweisungen zur Interpretation durch die interne Verarbeitungseinrichtung des Druckers. Daher gelten diese Formate im Rahmen dieser Beschreibung nicht als druckfertige Dateiformate. Durch Verwendung eines druckfertigen Formats lässt sich die Aufrasterung der Bilddaten so weit wie möglich in Richtung der endgültigen Anordnung der Bilddaten auf dem Ausgabemedium verschieben. Das ermöglicht die denkbar effizienteste Verwendung der Ausgabevorrichtung 122, indem deren interne Steuerschaltung Gelegenheit hat, den Rastervorgang zu optimieren, wodurch eine Ausgabe erzeugt wird, die den Vorstellungen des Bedieners mit höherer Wahrscheinlichkeit entspricht.

Für die Auftragsvorbereitung 106 umfasst das Computernetz 112 die Auftragsvorbereitungsstationen 116 und die Netzserver 118, die mit den Kunden-Workstations 114 über das Computernetz 112 gekoppelt sind. Die Phrase "gekoppelt mit" bezeichnet hier eine direkte oder indirekte Verbindung über eine oder mehrere Zwischenkomponenten. Derartige Zwischenkomponenten können sowohl hardware- als auch softwaregestützte Komponenten umfassen. Die Auftragsvorbereitungsstationen 116 führen vorzugsweise Software für das Management der Arbeitsabläufe aus, die nachfolgend detaillierter beschrieben wird und die es dem Bediener ermöglicht, Aufträge zu verwalten, zu bearbeiten und zu drucken. Die oder der Netzserver 118 beinhalten eine Dokumentbibliothek, die die Bearbeitung, das Management, die Speicherung und die Archivierung von Aufträgen oder nur den jeweiligen Dokumenten und/oder Auftragszetteln ermöglicht, und die den Ablauf der Aufträge von den Kunden-Workstations 114 zu den Auftragsvorbereitungsstationen 116 und von den Auftragsvorbereitungsstationen 116 zu den Druckservern 120 oder zu den Ausgabevorrichtungen 122 unterstützt und verwaltet. Beispiele für derartige Dokumentbibliotheken sind das Intra.Doc™ Document Management System von Intranet Solutions, Inc. aus Eden Prairie, Minnesota, USA, sowie das DOCFusion Document Management System von Hummingbird, Inc. aus York, Ontario, Kanada. In dem bevorzugten Ausführungsbeispiel handelt es sich bei den Auftragsvorbereitungsstationen 116 um Imagesmart™ Workstations von Heidelberg Digital, L.L.C. aus Rochester, New York, USA. Alternativ hierzu ist eine geeignete Computer-Hardwareplattform verwendbar, etwa eine, die einen Prozessor der Pentium™-Klasse von der Intel Corporation aus Santa Clara, Kalifornien, USA, oder einen leistungsstärkeren Prozessor umfasst, sowie 64 MB oder mehr Hauptspeicher, eine Festplatte mit 20 oder mehr GB Kapazität und eine entsprechend große Anzeigevorrichtung. In dem bevorzugten Ausführungsbeispiel erfüllen die Netzserver 118 vorzugsweise den ODMA-Standard (Open Document Management Architecture) und verfügen über Dokumentverwaltungsfunktionen sowie einen ausbaufähigen Speicher.

Die Auftragsvorbereitungsstationen 116 ermöglichen der Druckerei zudem, den Druckproduktionsprozess um bestimmte Kundendienstleistungen aufzuwerten. Derartige Dienstleistungen umfassen die Möglichkeit, von dem Kunden bereitgestellte Dokumente zu modifizieren und um Funktionen zu ergänzen, die der Kunde selbst nicht hinzufügen kann oder will. Zu diesen Merkmalen zählt die Seitennummerierung über mehrere Dokumente hinweg, das Einbringen von Identifikationszeichen, das Einrichten des Seitenlayouts für die Registerblätter und das Ausrichten der Ausgabe für den Bindevorgang. Die Auftragsvorbereitungsstationen 116 sehen darüber hinaus die Möglichkeit vor, Fehler in den Dokumenten zu beseitigen, etwa das Entfernen von Artefakten in gescannten Bildern und das Maskieren unerwünschter Texte oder Markierungen. Die Auftragsvorbereitungsstationen 116 lassen sich nutzen, um Ungenauigkeiten in der fertigen Ausgabe zu vermeiden, die durch den Druck- oder Bindeprozess verursacht werden. Derartige Ungenauigkeiten umfassen einen "wandernden" Einband, nachdem ein Dokument zu einer Broschüre ausgeschossen worden ist. Der "wandernde" Einband tritt auf, wenn die Anordnung der Bilder auf dem Papier nicht die Dicke des Einbands als Funktion der Seitenanzahl in dem Buch berücksichtigt, wodurch das Bild auf den Seiten nach innen wandert, je näher man dem Deckel oder Deckblatt kommt. Dieses Phänomen lässt sich verhindern, indem man das Bild beim Bogenausschießen etwas verschiebt. Mithilfe der Auftragsvorbereitungsstationen 116 kann der Bediener die Dokumentseiten für die fertige Ausgabe verwalten und layouten, was als "Ausschießen" und "Bogenausschießen" bezeichnet wird. Der Bediener kann Seiten umstellen, umkehren, Leerseiten einfügen, Seiten beschneiden und verschieben, Anschnitte erzeugen und mehrere Seiten auf einem Bogen für Korrekturbogen, Broschüren oder Faltblätter usw. anordnen. Weiterhin ermöglicht die Auftragsvorbereitungsstation 116 dem Bediener, das Dokument zu ergänzen, z.B. mit Identifikationszeichen, Seitennummer, Firmenzeichen und Wasserzeichen. Alle diese Dienstleistungen verleihen der fertigen Ausgabe einen Mehrwert. Die Formatierung sowie andere Modifikationen an dem Dokument, wie beispielsweise das Verschieben der Ränder, lassen sich global auf das gesamte Dokument oder nur auf ausgewählte Seiten anwenden. Derartige Änderungen an dem Dokument betreffen die sogenannten Dokument- oder Seitenattribute. Diese Änderungen werden auch als Dokument- oder Seitenausnahmen bezeichnet, da sie bestimmte Vorgaben für die ursprüngliche, vom Kunden vorgenommene Dokumentformatierung außer Kraft setzen.

Die nächste Stufe im Druckproduktionsablauf 100 ist die Druckproduktionsstufe 108. In der Druckproduktionsstufe 108 wird die endgültige Form der zu druckenden Dokumente an den Druckserver 120 übergeben, der dann den Auftrag an die Ausgabevorrichtungen 122 verteilt. In manuellen Druckereibetrieben würde die Druckproduktionsstufe 108 mit einem Bediener vergleichbar sein, der den produktionsfertigen Auftrag zur gewünschten Ausgabevorrichtung 122 trägt, um die Produktion zu beginnen. In der Druckproduktionsstufe 108 werden die Ausgaberessourcen des Druckereibetriebs verwaltet. Diese Verwaltungsaufgabe umfasst das Einreihen der Aufträge in die Warteschlangen für die entsprechenden Ausgabevorrichtungen 122 der Druckerei, das Weiterleiten der Aufträge an verfügbare Ausgabevorrichtungen 122, den Lastenausgleich zwischen den verschiedenen Ausgabevorrichtungen 122 und das Vorbereiten der Aufträge, etwa die Aufteilung oder die RIP-Verarbeitung der Aufträge vor Übergabe an eine bestimmte Ausgabevorrichtung 122. RIP steht für "Raster Image Processor" und bezeichnet die Hardware und/oder Software, die die druckfertigen Daten in Rasterbilder umsetzt. Darunter versteht man auch das Rastern eines Seitenbildes für das Ausgabemedium.

Der in der Druckproduktionsstufe 108 verwendete Druckserver 120 ist mit den Auftragsvorbereitungsstationen 116 und dem Netzserver 118 über das Computernetz 112 gekoppelt. Der Druckserver 120 ist zudem mit den verschiedenen Ausgabevorrichtungen 122 in der Druckerei gekoppelt. Es sei darauf hingewiesen, dass einige Ausgabevorrichtungen 122 die elektronische Übertragung der auszugebenden Daten möglicherweise nicht unterstützen, so dass hier ein manueller Bedienungsschritt erforderlich wird. Derartige Vorrichtungen können eine bestimmte Bindemaschine betreffen, der die teilweise fertiggestellten Dokumente per Hand zugetragen werden müssen, um die Produktion abzuschließen. Der Druckserver 120 ist vorzugsweise als ein separater Computer implementiert, der mit dem Computernetz 112 gekoppelt ist, wobei jedoch softwaregestützte Druckserver, die auf einem Netzserver 118, auf einer Auftragsvorbereitungsstation 116 oder auf einer Kunden-Workstation 114 laufen, hierfür ebenfalls verwendbar sind. In dem bevorzugten Ausführungsbeispiel umfasst der Druckserver 120 eine unabhängige Computerworkstation, die üblicherweise unter dem Betriebssystem UNIX oder Windows NT läuft, einen softwaregestützten Druckserver-Engine sowie eine Druckserver-Anwendung. Die Druckserver-Anwendung ermöglicht über eine entsprechende Benutzeroberfläche die Konfiguration und Verwaltung des Druckserver-Betriebs. Der Druckserver-Engine führt die automatischen Prozesse des Druckservers aus. Hierzu zählen das Einreihen der Aufträge und Auftragsinhalte (d.h. des Dokuments) in die Warteschlange, das Zuführen der Aufträge zu bestimmten Ausgabevorrichtungen anhand der Attribute des Druckauftrags und anhand der Eignung der betreffenden Vorrichtung sowie der Lastenausgleich zwischen den verschiedenen Produktions-Ausgabevorrichtungen, um alle Drucker möglichst gleichmäßig zu nutzen. Beispielsweise kann der Druckserver-Engine die Farbaufträge von Schwarzweißaufträgen trennen und als Kommunikations-Gateway dienen, das mehrere eingehende Kommunikations- und Druckprotokolle versteht und diese in die Kommunikations- und Druckprotokolle für die Ausgabevorrichtung 122 umsetzt.

Die letzte Stufe des Druckproduktionsablaufs 100 ist die Auslieferungsstufe 110. Die Auslieferungsstufe 110 ist die Stufe, in der die fertige Ausgabe auf der Ausgabevorrichtung 122 erstellt wird. Eine Ausgabevorrichtung 122 ist eine Computerausgabevorrichtung, etwa ein Drucker, der für hohe Auflagen gedruckter Dokumente ausgelegt ist. Diese Vorrichtungen bieten vorzugsweise die Möglichkeit, große Mengen von Dokumenten mit unterschiedlichen Medienarten und in unterschiedlicher Ausrüstung, wie Heftung oder Bindung, mit sehr hoher Geschwindigkeit zu erzeugen. Beispiele für derartige Ausgabevorrichtungen sind der Digimaster™ Digital High Volume Printer von Heidelberg Digital, L.L.C. aus Rochester, New York, USA, sowie der NexPress™ Color Printer von der NexPress Corporation aus Rochester, New York, USA.

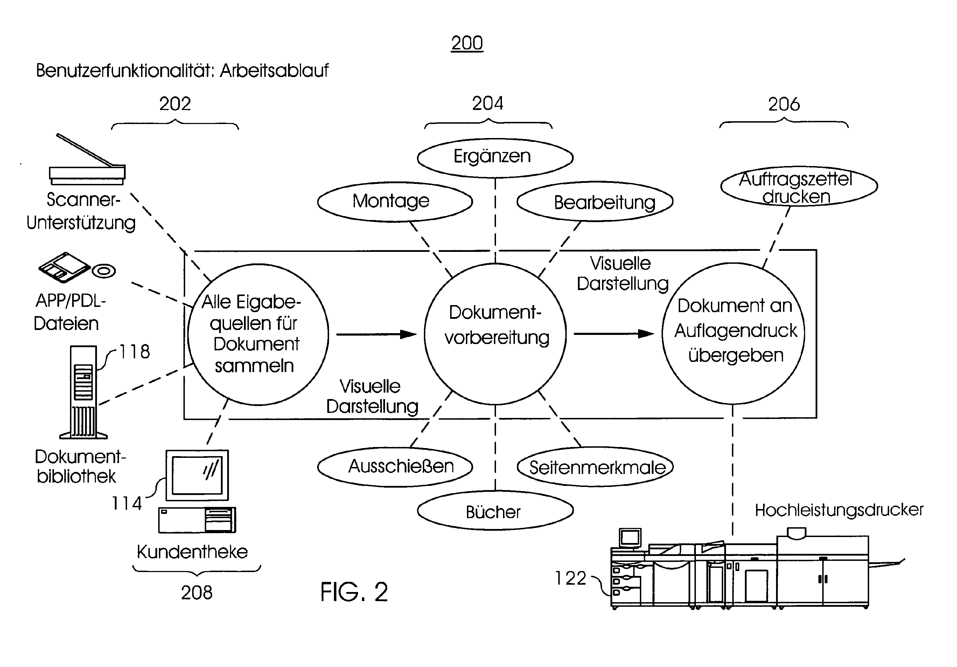

Fig. 2 zeigt ein Ablaufdiagramm zur Darstellung des Ablaufs der Benutzerfunktionen 200 des Auftragseingangs 104 und der Auftragsvorbereitung 106 des bevorzugten Ausführungsbeispiels. Der Ablauf der Benutzerfunktionen 200 umfasst eine Eingabestufe 202, eine Vorbereitungsstufe 204 und eine Produktionsstufe 206. In der Eingabestufe 202 werden sämtliche Dokumente des Auftrags zusammen aus den verschiedenen Eingabequellen 208 gesammelt. Wie zuvor detailliert erläutert, werden alle gesammelten Dokumente in ein druckfertiges Format umgesetzt, vorzugsweise in das Portable Document Format™. Diese Umsetzung kann ein manueller oder ein automatischer Vorgang oder eine Kombination aus beidem sein. Beispielsweise lässt sich ein besonderes Verzeichnis auf dem Netzserver 118 einrichten, in dem Datendateien in verschiedenen Dateiformaten abgelegt werden können, beispielsweise durch den Mitarbeiter, der die Dokumente von dem Kunden entgegennimmt und in der Kunden-Workstation 114 eingibt. Eine automatische Routine, die dieses Verzeichnis überwacht, erkennt, wenn dort Dateien vorhanden sind, und setzt sie automatisch in ein druckfertiges Format um (oder markiert sie für die manuelle Umsetzung). Dokumente, die die automatische Routine nicht verarbeiten kann, können zur manuellen Umsetzung gekennzeichnet werden. Die umgesetzten Dokumente werden dann an die Vorbereitungsstufe 204 übergeben, wo sie für die Produktion vorbereitet werden. Die Übertragung der umgesetzten Dokumente kann durch Verschieben der Dokumente in ein besonderes Verzeichnis auf dem Netzserver 118 erfolgen, auf das die Auftragsvorbereitungsstationen 116 zugreifen können, oder durch Übertragen der Dokumente zur Auftragsvorbereitungsstation 116. Dieser Vorgang kann manuell oder automatisch erfolgen, und kann das Einstellen der Dokumente in eine Dokumentwarteschlange für die Druckvorbereitung umfassen. Zudem kann dieser Vorgang die manuelle oder automatische Ermittlung der Möglichkeiten, der Qualifikation oder der Kompetenz der verschiedenen Bediener beinhalten, die derzeit an den verfügbaren Auftragsvorbereitungsstationen 116 angemeldet sind, sowie den aktuellen Bestand oder den Rückstand an Aufträgen in den jeweiligen Warteschlangen. Unter Berücksichtigung dieser Faktoren kann der Auftrag automatisch oder manuell an den Bediener geleitet werden, der aus technischer sowie terminlicher Sicht am besten in der Lage ist, den Auftrag abzuwickeln. Diese Funktionalität lässt sich implementieren, indem man eine Bedienerdatenbank anlegt, die die Möglichkeiten, die Qualifikation oder die Kompetenz der verschiedenen Bediener festhält, die in dem Druckereibetrieb tätig sind. Diese Datenbank kann mit der Software zur Warteschlangenverwaltung gekoppelt werden, die die den Bestand oder den Rückstand an Aufträgen an jeder Auftragsvorbereitungsstation 116 ausgleicht.

In der Vorbereitungsstufe 204 können die Dokumente beispielsweise zu einem Buch zusammengetragen, ausgestaltet, bearbeitet und ausgeschossen werden. Sobald die Dokumente für die Produktion vorbereitet worden sind, werden sie an die Produktionsstufe 206 übergeben. In der Produktionsstufe 206 werden die vorbereiteten Dokumente zusammen mit den Produktionsanweisungen (aus den Auftragszetteln) an den Druckserver oder direkt an die Ausgabevorrichtung 122 mithilfe eines Dateiladers übergeben, beispielweise dem Anwendungsprogramm Print File Downloader™ von Heidelberg Digital, L.L.C. aus Rochester, New York, USA. Der Ablauf der Benutzerfunktionen 200 kann als eine Kombination aus Hardware, Software und manuell ausgeführten Komponenten implementiert sein und kann eine oder mehrere der in dem Druckproduktionsablauf 100 genannten Komponenten umfassen.

In den bevorzugten Ausführungsbeispielen ist der Ablauf der Benutzerfunktionen 200 vorzugsweise als ein Softwareprogramm und eine Anwendung für das Management der Arbeitsabläufe implementiert sowie als Schnittstelle, die auf der Auftragsvorbereitungsstation 116 läuft. Die bevorzugte Software für das Management der Arbeitsabläufe orientiert sich visuell an dem Ansatz für grafische Benutzeroberflächen, der eine Integration der Arbeitsablauffunktionen unter einer einzigen Benutzeroberfläche vorsieht. Die visuelle und operative Darstellung der Managementsoftware ist zwar objektorientiert, aber die Implementierung der Software kann mit einer objektorientierten Programmiersprache oder mit einer nicht objektorientierten Programmiersprache erfolgen, wie nach dem Stand der Technik bekannt ist.

In der grafischen Benutzeroberfläche werden Dokumente, Auftragszettel und andere Elemente und Operationen (gemeinsam als "Objekte" bezeichnet) visuell an der Anzeige der Auftragsvorbereitungsstation 116 dargestellt, etwa in Form von Symbolen, Baumstrukturen und Kontextmenüs, und können mit bekannten Vorrichtungen und Verfahren angesprochen werden, etwa mithilfe einer Maus oder eines Track-Balls, um eine visuell dargestellte Zeigeeinrichtung zu steuern, die dann benutzt wird, um die Darstellungen anzuklicken, auszuwählen, zu ziehen und zu platzieren. Eine derartige Manipulation der visuellen Darstellungen bewirkt eine Manipulation der zugrundeliegenden Objekte (Dokumente, Jobtickets und anderer Elemente und Operationen). Darüber hinaus ermöglicht die grafische Benutzeroberfläche die Erstellung und Manipulation von Beziehungen und Zuordnungen unter den verschiedenen Objekten und zeigt diese Beziehungen und Zuordnungen visuell an. Beziehungen und Zuordnungen können beispielsweise mit einem hierarchischen Ansatz, wie einer Baumstruktur oder einer Dateiordnerstruktur oder einer anderen Form der visuellen Darstellung angezeigt werden. Grafische Benutzeroberflächen sind nach dem Stand der Technik bekannt, wobei es zahlreiche Softwarepakete gibt, die zur Entwicklung einer grafischen Benutzeroberfläche herangezogen werden können. Ein derartiges Paket ist das Open Software Development Kit von der Microsoft Corporation aus Redmond, Washington, USA.

Die bevorzugte grafische Benutzeroberfläche verwendet einen dokumentorientierten Ansatz mit einem zentralen Betrachtungsfenster zum Einsehen von Dokumenten, die sich in Bearbeitung befinden. In dem bevorzugten Ausführungsbeispiel wird die Dokumentbetrachtungsfunktion von dem Softwareprogramm Adobe Acrobat bereitgestellt, das von Adobe Systems, Inc. aus San Jose, Kalifornien, USA, hergestellt wird.

Wie bereits zuvor erwähnt, integriert die Software für das Management der Arbeitsabläufe Anwendungen, die die Stufen des Druckproduktionsablaufs 100 implementieren, steuern oder verwalten. Diese Anwendungen umfassen die Eingabe von Dokumenten aus verschiedenen Quellen, die Montage der Dokumente einschließlich der Erstellung und Bearbeitung von Büchern, die Bearbeitung von Dokumenten, das Ausgestalten von Dokumenten, den Zugriff auf die Dokumentbibliothek durch den Netzserver 118, das Einrichten und Verändern von Seitenattributen, das Erstellen und Verändern von Auftragszetteln sowie das Drucken.

Die Software für das Management der Arbeitsabläufe kann Eingaben aus vielen verschiedenen Quellen verarbeiten. Zu diesen Quellen zählen Druckvorlagen, sogenannte Hardcopies, die über einen Scanner eingelesen werden, native Anwendungsformate, wie die der Microsoft Office™-Produktfamilie, und DTP-Anwendungen, wie Quark Xpress™ von Quark. Inc. aus Denver, Colorado, USA sowie FrameMaker™ von Adobe Systems, Inc. aus San Jose, Kalifornien, USA. Die Software kann zudem Dokumente im Tagged Image File Format ("TIFF") einlesen sowie Dokumente, die bereits in einem druckfertigen Format vorliegen, wie PDF, PS oder PCL. Für das Einlesen von Hardcopies mittels Scanner unterstützt die Software Scanner-Schnittstellen nach dem Industriestandard, namentlich die TWAIN-Schnittstelle, definiert von der TWAIN-Group aus Boulder Creek, Kalifornien, USA, und die Image and Scanner Interface Specification ("ISIS") von Pixel Translations, Inc. aus San Jose, Kalifornien, USA, sowie nach Spezifikation ANSI/AIIM MS61-1996 des American National Standards Institute. Unter Verwendung dieser Standardschnittstellen liest die Software für das Management der Arbeitsabläufe die gescannten Bilddaten direkt in dem druckfertigen Format ein. Ein Scanner, der beispielsweise zur Verwendung mit der bevorzugten Software für das Management der Arbeitsabläufe geeignet ist, ist der Imagedirect™ Scanner von Heidelberg Digital, L.L.C. aus Rochester, New York, USA.

Die bevorzugte Software für das Management der Arbeitsabläufe unterstützt zudem den ODMA-Standard für die Anbindung an Dokumentbibliotheken. Zudem erweitert die ODMA-Unterstützung die Funktionalität der Dokumentbibliothek in Bezug auf Verwaltung, Speicherung und Archivierung von (nachfolgend beschriebenen) Verbunddokumenten und Jobtickets. Dies ermöglicht die Erstellung von Bibliotheken mit standardisierten Jobtickets oder die Aktualisierung und den Nachdruck von Verbunddokumenten, wie z.B. Büchern.

Nachdem Dokumente in die Software für das Management der Arbeitsabläufe geladen worden sind, werden entsprechende Werkzeuge bereitgestellt, um weiterführende Dienstleistungen durchzuführen und die Dokumente für die Produktion vorzubereiten. Unter Montage ist der Prozess zur Anordnung oder Neuanordnung von Seiten oder zum Hinzufügen oder Entfernen von Seiten in einem Dokument zu verstehen. Die Montage umfasst auch das Ausschießen dort, wo Seitenpositionen erzwungen werden, wenn beispielsweise die erste Seite eines Kapitels die Vorderseite des Papiers sein muss. Die Software für das Management der Arbeitsabläufe bietet Funktionen zum Ausschneiden, Kopieren, Einfügen und Verschieben an, die auf eine oder auf mehrere Seiten anwendbar sind. Diese Funktionalität ist vorzugsweise über Kontextmenüs, Dialogfelder oder Schaltflächen im Rahmen der grafischen Benutzeroberfläche implementiert. Darüber hinaus werden die Ergebnisse der jeweiligen Operationen in einer visuellen Darstellung des Dokuments in dem zentralen Dokumentbetrachtungsfenster an der Anzeige der Auftragsvorbereitungsstation 116 gezeigt.

Die Software für das Management der Arbeitsabläufe sieht zudem die Bearbeitung und Ausgestaltung des Dokuments vor. So stehen Werkzeuge zur Bearbeitung des Bildobjektbereichs einer gescannten Seite bereit, u.a. zum Löschen innerhalb und außerhalb eines Bereichs, zum Ausschneiden, Verschieben, Kopieren und Einfügen eines Bereichs sowie ein Löschstift. Werkzeuge zur Seitenbearbeitung stehen ebenfalls zur Verfügung, um eine oder mehrere Seiten zu bearbeiten, u.a. zum Markieren und Ausschneiden von Bereichen. Zudem sind Werkzeuge zur Ausgestaltung von Dokumenten vorhanden, u.a. in Form alphanumerischer und grafischer Ausgestaltungen. Zu derartigen Ausgestaltungen zählt die Seitennummerierung und das Einbringen von Identifikationszeichen. Mit diesen Werkzeugen ist es möglich, Bilder hinter dem Dokumentinhalt anzuordnen, die auch als Wasserzeichen bezeichnet werden. Die Ausgestaltung kann auf jeden Teil einer oder mehrerer Seiten angewandt werden. Für alphanumerische Ausgestaltungen lassen sich die Schriftgröße und der Schriftstil steuern. In allen Fällen werden die Ergebnisse der jeweiligen Operationen in einer visuellen Darstellung des Dokuments in dem zentralen Dokumentbetrachtungsfenster an der Anzeige der Auftragsvorbereitungsstation 116 gezeigt. In den bevorzugten Ausführungsbeispielen können Modifikationen oder Ausgestaltungen durch Zeigen auf eine visuelle Darstellung des Dokuments und/oder der Seiten innerhalb des Dokuments und durch Auswählen, Ziehen, Platzieren oder Anklicken der Darstellung und/oder durch Auswählen aus einem Optionsmenü erfolgen, wobei die Auswahl einer bestimmten Option bewirkt, dass die zugehörige Bearbeitungs- oder Ausgestaltungsoperation auf die angegebenen Teile des Dokuments Anwendung findet. Alternativ hierzu ist ein Optionsfeld darstellbar, aus dem der Benutzer eine Option wählen kann, die auf ausgewählte Teile des Dokuments Anwendung findet. Die Benutzeroberfläche kann auch ein Dialogfeld oder andere visuelle Steuerungselemente zur Eingabe von Steuerungswerten für die Bearbeitung oder Ausgestaltung vorsehen, etwa der Startnummer eines Bereichs von Identifikationszeichen.

Die Software für das Management der Arbeitsabläufe sieht vorzugsweise auch die Unterstützung von Verbunddokumenten vor; hierbei handelt es sich um Dokumente, die sich aus einem oder aus mehreren anderen Dokumenten zusammensetzen, etwa Büchern, die aus Kapiteln bestehen, oder Kursliteratur, die aus einer oder aus mehreren Quellen stammt. Verbunddokumente nutzen die Vorteile der objektorientierten Technik der Software für das Management der Arbeitsabläufe. Ein Verbunddokument ("VD") ist eine Sammlung eines oder mehrerer Dokumente, die einer bestimmten Ordnung unterliegen, etwa der Kapitel eines Buches. Das Verbunddokument enthält ein automatisch erstelltes Zentraldokument, bei dem es sich um ein einzelnes Dokument handelt, dass das gesamte zusammengetragene Dokument enthält. Es sind Werkzeuge vorgesehen, die eine einfache Verwaltung der Dokumente eines Verbunddokuments, das Zusammentragen und Aktualisieren der Dokumente in dem Zentraldokument und die wahlweise Dokumentbearbeitung ermöglichen, etwa das wahlweise Drucken der Dokumente in dem Verbunddokument. Darüber hinaus sind Werkzeuge vorgesehen, die den Inhalt der Dokumente in dem Verbunddokument interpretieren und ein Inhaltverzeichnis in dem Zentraldokument automatisch erstellen können. Ein Verbunddokument verhält sich ansonsten wie ein übliches Dokument und lässt sich bearbeiten, ausgestalten, Jobtickets zuordnen usw. Ein Verbunddokument kann weitere Verbunddokumente enthalten, beispielsweise im Falle mehrbändiger Bücher. Die einzelnen Dokumente und Verbunddokumente innerhalb des Verbunddokuments behalten ihre Unabhängigkeit bei und können unabhängig von dem Verbunddokument bearbeitet oder gedruckt oder von anderen Verbunddokumenten genutzt werden, wobei diese Bearbeitungen automatisch oder manuell in das Zentraldokument innerhalb eines bestimmten Verbunddokuments eingebracht werden. Die Software für das Management der Arbeitsabläufe zeigt zudem eine visuelle Darstellung an, beispielsweise in Form einer hierarchischen Struktur oder einer Baumstruktur, die das Verbunddokument sowie zugehörige Dokumente und Jobtickets zeigt. In den bevorzugten Ausführungsbeispielen lassen sich Verbunddokumente erstellen oder bearbeiten, indem man auf die visuellen Darstellungen eines oder mehrerer Dokumente und/oder auf eine visuelle Darstellung eines Verbunddokuments zeigt und einen Vorgang zum Auswählen, Ziehen, Platzieren oder Klicken durchführt und/oder aus einem Optionsmenü auswählt, wobei die Auswahl einer bestimmten Option bewirkt, dass die zugehörigen Funktion auf die ausgewählten Dokumente oder die Verbunddokumente angewendet werden. Alternativ hierzu ist ein Optionsfeld darstellbar, aus dem der Benutzer eine Option wählen kann, die auf ausgewählte Verbunddokumente Anwendung findet. Die Benutzeroberfläche kann zudem ein Dialogfeld oder eine andere visuelle Steuerung vorsehen, um Steuerwerte für die Verbunddokumente einzugeben, beispielsweise für die Seitenränder. Ein Benutzer kann beispielsweise ein oder mehrere Dokumente auswählen und dann die Option "Verbunddokument erstellen" aus einem Kontextmenü wählen. Die Software für das Management der Arbeitsabläufe erstellt dann eine visuelle Darstellung des Verbunddokuments an der Anzeige der Workstation und zeigt die Zuordnung des Verbunddokuments zu den ausgewählten Dokumenten an. Alternativ hierzu kann der Benutzer zunächst eine visuelle Darstellung eines Verbunddokuments erzeugen und dann die visuelle Darstellung eines oder mehrerer Dokumente auf die visuelle Darstellung des Verbunddokuments ziehen und darauf platzieren. Die Software für das Management der Arbeitsabläufe erstellt dann die entsprechenden logischen Zuordnungen der Daten für die die visuelle Darstellung Anwendung findet.

Die Software für das Management der Arbeitsabläufe ist vorzugsweise mit Angaben über die verschiedenen Ausgabevorrichtungen 122 programmiert, die in der Druckerei oder an anderer Stelle verfügbar sind, sowie über deren Funktionalität oder über andere Geräte, etwa Geräte zur Weiterverarbeitung von Druckerzeugnissen, die entweder automatisch oder manuell verwendbar sind. Die Software sieht Werkzeuge vor, mit denen der Bediener Seitenmerkmale/Formatierungsmerkmale festlegen kann, die durch diese besondere Funktionalität möglich werden. Derartige Seitenmerkmale sind u.a. Duplex- oder Simplex-Druck (doppelseitige oder einseitige Bedruckung), Einbindemöglichkeiten, wie Heften oder Lochstanzung, sowie Einstellmöglichkeiten für die Behandlung von Registerblättern oder geordneten Medien. Die bevorzugten Ausführungsbeispiele unterstützen vorzugsweise alle Funktionen der digitalen Drucker für hohe Auflagen der Digimaster™ Produktfamilie von Heidelberg Digital, L.L.C. aus Rochester, New York, USA. In den bevorzugten Ausführungsbeispielen lassen sich diese Seitenfunktionen durch Auswählen oder Zeigen auf eine visuelle Darstellung einer oder mehrerer Seiten und durch Auswählen aus einem Optionsmenü einstellen, wobei die Wahl einer bestimmten Option bewirkt, dass das zugeordnete Merkmal auf die gewählten Seiten angewandt wird. Alternativ hierzu ist ein Optionsfeld darstellbar, aus dem der Benutzer eine Option wählen kann, die auf ausgewählte Seiten Anwendung findet. Die Benutzeroberfläche kann zudem ein Dialogfeld oder eine andere visuelle Steuerung vorsehen, um Steuerwerte für das Merkmal einzugeben, beispielsweise für die Art der Registerblätter. Das Einstellen von Seitenmerkmalen für bestimmte Seiten bewirkt die Programmierung von Anweisungen für die Ausgabevorrichtung 122, um diese Merkmale in der druckfertigen Datei zu codieren. Wenn die Ausgabevorrichtung 122 die Datei für den Druck einliest, interpretiert sie diese Anweisungen, um das gewünschte Merkmal zu implementieren. Bei Seitenmerkmalen, die nicht zum Ausführungsumfang der aktuellen Ausgabevorrichtung 122 zählen, kann die Ausgabevorrichtung 122 dem Bediener anzeigen, dass ein manueller Eingriff erforderlich ist, um den Bediener dann durch die erforderlichen Schritte zur Implementierung des Seitenmerkmals zu führen und den Auftrag abzuschließen. Das kann beinhalten, dass der Bediener angewiesen wird, teilweise fertiggestellte Dokumente zu entnehmen und diese an eine Bindemaschine zur Fertigstellung zu übergeben, oder der Bediener wird angewiesen, eine bestimmte Art von Medien oder Registerbogen in die Ausgabevorrichtung 122 einzulegen.

Die Software für das Management der Arbeitsabläufe sieht zudem Werkzeuge vor, um elektronische Versionen von Jobtickets zur Angabe von Anweisungen und Parametern für die Ausgabevorrichtung 122 zu unterstützen sowie für andere Weiterverarbeitungsschritte, die gegebenenfalls automatisiert sind und die das gesamte Dokument betreffen, z.B. Auftragsmerkmale oder globale Dokumentattribute. Dies betrifft solche Attribute wie den allgemeinen Medientyp oder die zu verwendende Farbe und das Bindeverfahren wie beispielsweise Heftbindung. Wie bereits erwähnt, können Jobtickets unabhängig von den Dokumenten oder Verbunddokumenten vorliegen. Sie werden von der Software für das Management der Arbeitsabläufe eigenständig am Bildschirm angezeigt. Es sind Werkzeuge vorgesehen, um Jobtickets zu bearbeiten, beispielsweise, um diese zu archivieren, zu speichern und zu Dokumenten oder Verbunddokumenten zusätzlich zur Bearbeitung der jeweiligen Optionen zuzuordnen. In den bevorzugten Ausführungsbeispielen sind Jobtickets wie Dokumente manipulierbar, also mit Hilfe von Zeigen, Klicken, Auswählen, Ziehen und Platzieren. Ein Jobticket kann beispielsweise einem Dokument zugeordnet werden, indem man das Jobticket auswählt, auf ein bestimmtes Dokument zieht und es dort platziert. Die Software für das Management der Arbeitsabläufe zeigt dann die Zuordnung vorzugsweise derart an, dass das Jobticket innerhalb der Dokumenthierarchie angeordnet ist. Sobald die Zuordnung erfolgt ist, gelten die von dem Jobticket eingestellten Optionen für das zugeordnete Dokument oder Verbunddokument. Die durch das Jobticket dargestellten Optionen lassen sich einstellen, indem man in dem Jobticket ein Dialogfeld oder ein Kontextmenü aufruft, das die verfügbaren Optionen anzeigt und eine Änderung der Optionswerte ermöglicht. Jobtickets, die den Dokumenten zugeordnet sind, lassen sich mit dem Dokument bearbeiten. Beispielsweise werden mit dem Speichern des Dokuments auch alle zugeordneten Jobtickets gespeichert. Die Software für das Management der Arbeitsabläufe sieht zudem Funktionen vor, um Bibliotheken standardisierter Jobtickets zu erstellen, die beispielsweise benutzt werden können, um Prozeduren über mehrere Franchise-Druckereibetriebe hinweg zu standardisieren.

Die Software für das Management der Arbeitsabläufe sieht weiterhin Werkzeuge zum Senden der vorbereiteten Dokumente und aller zugeordneten Jobtickets zur endgültigen Produktion an die Ausgabevorrichtung vor. In den bevorzugten Ausführungsbeispielen lassen sich Dokumente oder Verbunddokumente an eine Ausgabevorrichtung senden, indem man die visuelle Darstellung des Dokuments oder des Verbunddokuments auswählt, anklickt oder diese auf die visuelle Darstellung des Druckservers oder der Ausgabevorrichtung zieht. Alternativ hierzu kann der Benutzer eine entsprechende Option aus einem Kontextmenü, einem Dialogfeld oder einer Schaltfläche wählen. Die Software für das Management der Arbeitsabläufe unterstützt Standardschnittstellen und Protokolle für Ausgabevorrichtungen und Druckserver. Es sind Werkzeuge zum Verwalten, Auswählen und Überwachen mehrerer Ausgabevorrichtungen vorgesehen. Diese Werkzeuge melden den Zustand der jeweiligen Vorrichtung visuell an den Benutzer zurück, beispielsweise den aktuellen Stand der Warteschlangen.

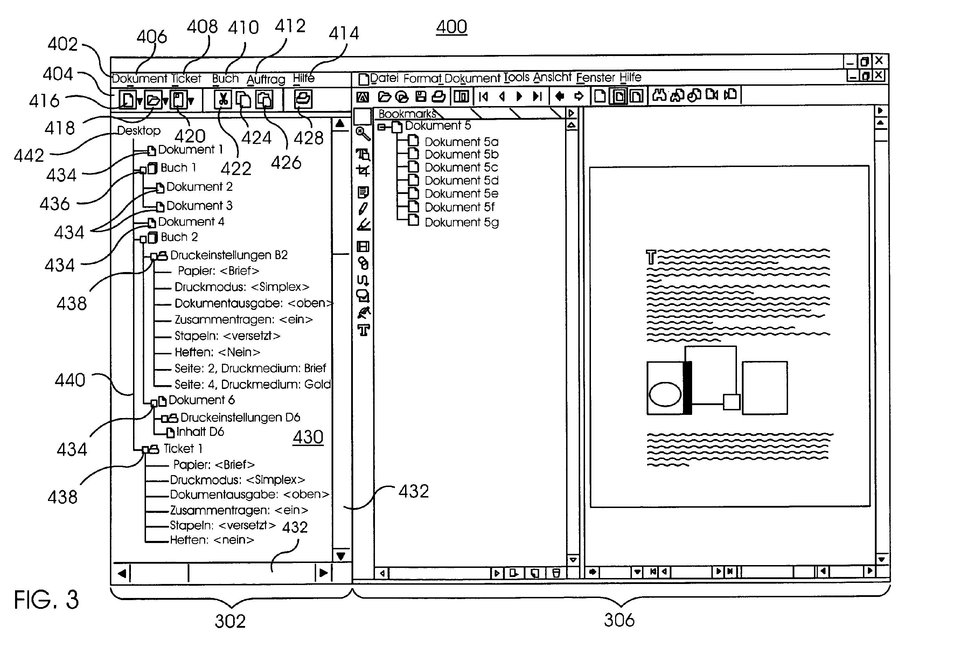

Fig. 3 zeigt eine Darstellung einer grafischen Benutzeranzeige 400 gemäß einem bevorzugten Ausführungsbeispiel. Die grafische Benutzeranzeige 400 umfasst einen Betrachter oder Viewer 306 sowie Schreibtisch- oder Desktop-Komponenten 302. Die Schreibtischkomponente 302 umfasst Menüs 402 und Schaltflächen 404, die es dem Benutzer ermöglichen, die verschiedenen zuvor beschriebenen Objekte visuell zu verwalten und zu bearbeiten. Die Menüs 402 umfassen ein Dokumentmenü 406, ein Jobticketmenü 408, ein Buchmenü 410, ein Auftragsmenü 412 und ein Hilfemenü 414. Die Schaltflächenleiste 404 umfasst eine Neues-Objekt-Schaltfläche 416, eine Öffnen-Schaltfläche 418 und eine Bibliothekenzugriff-Schaltfläche 420. Die Schaltflächenleiste 404 umfasst zudem eine Ausschneiden-Schaltfläche 422, eine Kopieren-Schaltfläche 424, eine Einfügen-Schaltfläche 426 und eine Drucken-Schaltfläche 428. Grafische Benutzeroberflächen sind nach dem Stand der Technik bekannt, wobei es zahlreiche Möglichkeiten gibt, eine grafische Benutzeroberfläche zu implementieren, so dass alle Formen von grafischen Eingabevorrichtungen, einschließlich Pop-Up-Menüs, separater Menüleisten, Dialogfeldern, Tastaturbefehlen und Mausmenüs sowie alternative physische Eingabevorrichtungen berücksichtigt sind.

Wie zuvor erläutert, erfordern zahlreiche Anwendungen die Verwendung geordneter Registerblätter oder Register, die zwischen verschiedenen Teilen eines Dokuments eingefügt sind. Zwar ist einem Kunden möglicherweise bekannt, dass ein Register mit bestimmten Informationen zwischen bestimmten Teilen eines Dokuments erforderlich ist, aber der Kunde kennt normalerweise nicht die jeweiligen Registerarten oder -sätze, die von dem Druckereibetrieb verwenden werden. Der Kunde kann daher nicht die Lage der auf dem Register zu druckenden Information angeben. Zudem treten Situationen auf, in denen Dokumente aus kundenseitig vorab erstellten Teilen montiert werden müssen. Wenn beispielsweise ein Kunde Benutzerhandbücher für Maschinen erstellen möchte, die auf Bestellung angefertigt werden, erhält die Dokumentationsabteilung eine Auswahlliste von der Fertigungsabteilung, die die Dokumentelemente umfasst, aus denen sich der vollständige Dokumentationssatz zusammensetzt. Ein Kunde, der ein Drucksystem bestellt, das zusätzlich nur einen Finisher enthält, wäre hierfür ein Beispiel. Dieser Kunde erhielte nur das Handbuch für die Druckmaschine plus dem Finisher-Handbuch. Ein zweiter Kunde bestellt ein Drucksystem mit einem Stapler und das Broschüren-Modul zusätzlich zur Standardkonfiguration. Dieser Kunde würde dann die Dokumentation für diese beiden Teile sowie die Basisdokumentation erhalten. Die Teile der Dokumentation sind mit einem gedruckten Registerblatt versehen, um die Orientierung in dem Ordner zu erleichtern. Das Register enthält den Namen des Untersystems, das im folgenden Abschnitt beschrieben wird. Je nach Anzahl der Kapitel werden die einzelnen Kapitelseiten in dem Ordner auf unterschiedlichen Seiten der Register oder eines anderen "geordneten" Mediensatzes gedruckt. Diese Register müssen auf die "Ordnung" der Register ausgerichtet sein.

Um den Registerinhalt auf eine beliebige Registerseite eines geordneten Registersatzes drucken zu können, wird der Registerinhalt in der vorliegenden Erfindung nicht als eine reguläre Seite eines Dokuments gespeichert. Gemäß der vorliegenden Erfindung wird im Speicher eine Markierung abgelegt, die anzeigt, dass eine Seite ein Register enthält. Die Information, die auf dem Register in der PDF-Seite erzeugt wird, wird ebenfalls im Speicher abgelegt. Vorzugsweise verwendet der Benutzer eine grafische Benutzeroberfläche an einer Station wie der Auftragsvorbereitungsstation 116, um die Markierung noch vor der Seiten- oder Auftragserstellung einzugeben. So kann der Benutzer die Seite in dem Dokument umstellen oder die Seite sogar in ein anderes Dokument kopieren, ohne dass diese Information verloren geht. Wenn das Dokument, das diese Seiten enthält, gedruckt wird, durchläuft das Druckausgabemodul etwa eine Ausgabevorrichtung 122, das PDF-Dokument und erzeugt die Register an den richtigen Stellen auf den Registerseiten. Daher braucht nur das Ausgabemodul Kenntnis über die Anzahl der geordneten Medien in einem Satz zu haben.

Beim Erstellen des Dokuments ist der verfügbare Raum auf dem Register zu berücksichtigen. Wenn zum Zeitpunkt der Seitenerstellung davon ausgegangen wird, dass ein Satz von 5 Registern verwendet wird, aber der eigentliche Druck auf 9 Registern ausgeführt wird, halbiert sich dadurch der verfügbare Raum nahezu um die Hälfte. Zur Speicherung dieser Information auf Seitenebene können private PDF-Seitenobjekte verwendet werden. Hierdurch ist es möglich, die Seite in einem Dokument umzustellen oder in andere Dokumente zu kopieren, ohne berücksichtigen zu müssen, welche Seiten auf Registern gedruckt werden.

Erfindungsgemäß stellt der Bediener an der Auftragsvorbereitungsstation 116 zunächst alle elektronischen und Hardcopy-Eingaben zu einem einzelnen elektronischen Dokument zusammen. In einem Ausführungsbeispiel wird das Adobe Acrobat Softwareprogramm benutzt, um die Lage der Registerblätter mithilfe eines Dienstprogramms zu ermitteln, das mit derselben Anwendung zusammenarbeitet, die zur Montage der Eingabe verwendet wird (z.B. ein Acrobat-Plug-In-Modul). Diese Information wird zusammen mit dem Dokument gespeichert. Mithilfe des Dienstprogramms, das, wie bereits erwähnt, mit derselben Anwendung zusammenarbeitet, die auch zur Zusammenstellung der Eingabe verwendet wird, werden die Registertextinformationen unabhängig von der Registerordnung eingegeben. Diese Informationen umfassen normalerweise den Text und die Schriftart. Die Information wird zusammen mit dem Dokument gespeichert. Dann ruft der Bediener das Druckausgabemodul auf und bestimmt, welcher Bogen für die Register verwendet werden soll. Damit wird auch die Ordnung für die Register festgelegt. Das Dokument wird dann geöffnet und beginnend mit der ersten Seite bis zur letzten Seite eingelesen. Für jedes identifizierte Registerblatt wird die Registertextinformation und die Registerlage anhand der Registerordnung entnommen, um das Registerblatt als eine zusätzliche Seite des Dokuments zu erzeugen. Das ergänzte Dokument wird dann an die Druckvorrichtung als Korrekturbogen übergeben. Wenn nach Prüfung des Korrekturbogens die Registerordnung geändert werden muss, ruft der Drucker das Druckausgabemodul auf und gibt den für die Register zu verwendenden Bogen an, worauf der Drucker die zuvor genannten Schritte durchläuft, bis die gewünschte Ausgabe erzielt wird.

Diese Konfiguration ermöglicht es, den Registerinhalt bis zum letztmöglichen Zeitpunkt (d.h. bis zum Drucken) abzugleichen. Dank dieser bevorzugten Konfiguration braucht der Ersteller des Dokumentinhalts nicht zu wissen, welche Registerordnung zum Zeitpunkt des Drucks Verwendung findet. Diese Anordnung entlastet die Druckvorrichtung zudem von dem Aufwand, den Seiteninhalt zuerst erzeugen zu müssen. Durch die vorliegende Erfindung erübrigt sich ein variabler Datenprozess in der Druckvorrichtung, der dazu beitragen könnte, die Seitenerstellung auf der Druckvorrichtung zu unterstützen, der jedoch die Druckvorrichtung und auch die Anwendung verteuert, die die variablen Daten zur Übergabe an die Druckvorrichtung erzeugen müsste.

Obwohl die Erfindung mit besonderem Bezug auf bevorzugte Ausführungsbeispiele beschrieben wurde, ist die Erfindung nicht darauf beschränkt, sondern es können innerhalb des Schutzbereichs der nachstehenden Ansprüche Änderungen und Abwandlungen vorgenommen werden.

### Liste der Bezugszeichen

- 100: Druckproduktionsablauf
- 102: Auftragserstellung
- 104: Aufragseingang
- 106: Auftragsvorbereitung
- 108: Druckproduktionsstufe
- 112: Computernetz
- 114: Computer-Workstation
- 116: Auftragsvorbereitungsstationen
- 118: Netzserver
- 120: Druckserver
- 122: Ausgabe vorrichtung
- 200: Ablauf der Benutzerfunktionen
- 202: Eingabestufe
- 204: Vorbereitungsstufe
- 206: Produktionsstufe
- 208: Eingabequellen
- 302: Desktop
- 306: Anzeige
- 400: grafische Benutzeranzeige
- 402: Menüs
- 404: Schaltflächenleiste
- 406: Dokumentmenü
- 408: Auftragszettelmenü
- 410: Buchmenü
- 412: Auftragsmenü
- 414: Hilfemenü
- 416: Neues-Objekt-Schaltfläche
- 418: Öffnen-Schaltfläche
- 420: Bibliothekenzugriff-Schaltfläche
- 422: Ausschneiden-Schaltfläche
- 424: Kopieren-Schaltfläche
- 426: Einfügen-Schaltfläche
- 428: Drucken-Schaltfläche

## Patentansprüche

1. Druckvorrichtung zum Drucken eines Dokuments, wobei die Druckvorrichtung folgendes umfasst:
eine Auftragsvorbereitungsstation (116) einschließlich Prozessor und einem Speicher, wobei die Auftragsvorbereitungsstation (116) eine im Speicher speicherbare Markierung erzeugt, die anzeigt, dass eine ausgewählte Seite in einem zu druckenden Dokument ein Register enthält, und wobei die Auftragsvorbereitungsstation (116) eine Eingabevorrichtung für einen Benutzer umfasst, um die Markierung und die auf dem Register zu erzeugende Information eingeben zu können; und
ein Druckausgabemodul, das die auf dem Register zu erzeugende Markierung und Information empfängt und diese Information auf dem Register druckt.

2. Druckvorrichtung zum Drucken eines Dokuments, wobei die Druckvorrichtung folgendes umfasst:
eine Materialeingabequelle, die einen Satz von Registerbogen enthält, der eine Vielzahl von Registerbogen umfasst, die Register an verschiedenen Stellen enthalten, eine Auftragsvorbereitungsstation (116) einschließlich Prozessor und einem Speicher, wobei die Auftragsvorbereitungsstation (116) eine im Speicher speicherbare Markierung erzeugt, die anzeigt, dass eine ausgewählte Seite in einem zu druckenden Dokument ein Register enthält;
eine Benutzeroberfläche mit einer Eingabevorrichtung für einen Benutzer, um die Markierung und die auf dem Register zu erzeugende Information eingeben zu können und um einem Benutzer zu ermöglichen, einen bestimmten, in dem Dokument zu verwendenden Registerbogen auszuwählen, wobei die Registertextinformation unabhängig von dem jeweiligen registerspezifischen Registerbogen eingegeben wird, und wobei der Prozessor eine zusätzliche Seite für das Dokument als ein Registerblatt erzeugt, und wobei das Registerblatt die Registertextinformation und die Lage des Registers in dem Registersatz enthält, basierend auf der Ordnung der Register in dem Satz; und
ein Druckausgabemodul, das die auf dem Register zu erzeugende Markierung und Information empfängt und das diese Information auf dem Register druckt.

3. Druckvorrichtung nach einem der Ansprüche 1 bis 2,
**dadurch gekennzeichnet,**
**dass** die Registermarkierung und die Registerinformation als Objekte speicherbar sind.

4. Druckvorrichtung nach Anspruch 4,
**dadurch gekennzeichnet,**
**dass** diese Objekte Seitenobjekte sind.

5. Druckvorrichtung nach einem der Ansprüche 1 bis 4,
**dadurch gekennzeichnet,**
**dass** diese Objekte PDF-Objekte umfassen.

6. Druckvorrichtung nach Anspruch 1,
**dadurch gekennzeichnet,**
**dass** ein Registerblatt als eine zusätzliche Seite des Dokuments erzeugt wird.

7. Verfahren zum Drucken eines Dokuments auf einer Druckvorrichtung, die ein Druckausgabemodul beinhaltet, wobei das Verfahren folgende Schritte umfasst:
Erzeugen einer Markierung, die anzeigt, dass eine ausgewählte Seite in einem zu druckenden Dokument ein Register enthält;
Eingeben in das Drucksystem einer auf dem Register zu erzeugenden Markierung und Information; und
Verwenden der auf dem Register zu erzeugenden Markierung und Information, um diese Information auf dem Register in einem Druckausgabemodul zu drucken; und
Verwenden des Druckausgabemoduls, um die auf dem Register zu erzeugende Information auf Registerbogen zu drucken.

8. Verfahren zum Drucken eines Dokuments auf einer Druckvorrichtung, die ein Druckausgabemodul beinhaltet, wobei das Verfahren folgende Schritte umfasst:
Bereitstellen eines Registerbogensatzes, der eine Vielzahl von Registerbogenblättern umfasst, die Register an verschiedenen Stellen enthalten,
Erzeugen einer Markierung, die anzeigt, dass eine ausgewählte Seite in einem zu druckenden Dokument ein Register enthält;
über eine Benutzeroberfläche Eingeben in das Drucksystem einer auf dem Register zu erzeugenden Markierung und Information; und
Verwenden der auf dem Register zu erzeugenden Markierung und Information, um diese Information auf dem Register in einem Druckausgabemodul zu drucken; Auswählen eines bestimmten, in dem Dokument zu verwendenden Registerbogens, wobei die Registertextinformation unabhängig von der jeweiligen registerspezifischen Registerbogenwahl eingegeben wird;
Erzeugen eines Registerblatts als eine zusätzliche Seite des Dokuments, wobei das Registerblatt die Registertextinformation und die Lage des Registers in dem Registersatz basierend auf der Ordnung der Register in dem Satz enthält; und
Verwenden des Druckausgabemoduls, das die auf dem Register zu erzeugende Markierung und Information empfängt, und Drucken dieser Information auf dem Register.

9. Verfahren nach einem der Ansprüche 7 bis 8,
**dadurch gekennzeichnet,**
**dass** das Verfahren zudem das Speichern der Registermarkierung und der Registerinformation in Form von Objekten umfasst.

10. Verfahren nach Anspruch 9,
**dadurch gekennzeichnet,**
**dass** der Speicherschritt das Speichern von Objekten als Seitenobjekte umfasst.

11. Verfahren nach einem der Ansprüche 9 bis 10,
**dadurch gekennzeichnet,**
**dass** der Schritt des Speicherns von Objekten als Seitenobjekte das Speichern von Objekten als PDF-Objekte umfasst.

12. Verfahren nach Anspruch 7,
**dadurch gekennzeichnet,**
**dass** das Verfahren zudem das Erzeugen eines Registerblattes als zusätzliche Seite des Dokuments umfasst.
